# EUROPEAN PATENT SPECIFICATION

(11) **EP 3 632 650 B1**
(45) Date of publication and mention of the grant of the patent: **01.02.2023**
(21) Application number: 18209706.3
(22) Date of filing: 03.12.2018
(51) Int. Cl.: B29C 45/76

(54) **INJECTION MOLDING SYSTEM AND INJECTION MOLDING METHOD**
SPRITZGUSSSYSTEM UND SPRITZGUSSVERFAHREN
SYSTÈME DE MOULAGE PAR INJECTION ET PROCÉDÉ DE MOULAGE PAR INJECTION

(30) Priority: 01.10.2018 TW 107134651
(43) Date of publication of application: 08.04.2020
(73) Proprietor: Chung Yuan Christian University, Taoyuan City 32023 (TW)
(72) Inventor: Chen, Shia-Chung, 32023 Taoyuan City (TW); Chang, Yung-Hsiang, 32023 Taoyuan City (TW); Chiu, Ming-Chi, 32023 Taoyuan City (TW); Tsai, Pi-Lin, 32023 Taiwan (TW)
(74) Representative: Ter Meer Steinmeister & Partner

(56) References cited:
- EP-A1- 0 607 431
- EP-A1- 3 248 752
- JP-A- H04 209 004
- JP-A- S57 116 622
- US-A- 5 275 768
- US-A1- 2005 082 707
- US-A1- 2006 131 771
- US-A1- 2008 102 147
- FUHRMANN G ET AL: "QUALITAETSSICHERUNG IM SPRITZGIESSPROZESS", KUNSTSTOFFE, CARL HANSER VERLAG, MUNCHEN, DE, vol. 86, no. 12, 1 December 1996 (1996-12-01), XP000679671, ISSN: 0023-5563

## Description

### BACKGROUND

### Technical Field

The disclosure relates to a molding system and a molding method, particularly to an injection molding system and an injection molding method.

### Related Art

Injection molding is a process of producing parts made of thermoplastic or thermosetting plastic. A plastic is heated and melted into a flowing state in a barrel of an injection molding machine. Next, under pressurization from a plunger or a screw, the plastic is compressed and moved forward, and is then injected into a closed mold having a lower temperature at very high speed through a nozzle at a front end of the barrel. After a period of cooling and setting, the mold is opened to obtain an injection molded product.

In the process of injection molding, factors such as injection pressure, mold temperature, pressure holding time and environmental temperature may affect product quality. An operator usually determines a degree of defects in a product by visual means according to experience, and accordingly estimates and provides a new injection molding parameter to the machine so as to inject and form a new product. However, the injection molding parameter may not be completely accurately adjusted according to the operator's determination based on experience, and it is difficult for an inexperienced operator to adjust the parameter in the above manner. As a result, the yield of the product is low and remanufacturing cost is wasted.

US 5,275,768 A discloses an injection molding condition setting method in which a processor of a control device is furnished with an expert system, which includes a state table containing a plurality of states each composed of a combination of mold information, resin data, molding conditions, molding defect data, and molding monitor data, and a weight table listing weighted countermeasures against defect molding set for every state, retrieves a state nearest to a trial injection state, which is discriminated in accordance with the mold information, resin data, and molding conditions set before the start of trial injection, the molding monitor data detected during the execution of the trial injection and the molding defect data inputted after the end of the trial injection, from the state table, and determines a molding defect countermeasure corresponding to the retrieved state and having the maximum weight with reference to a weight table.

US 2006/0131771 A1 discloses a quality assurance method for in-mold coating of molded articles in which coated articles produced with one set of molding and coating process variables are inspected and changes are made to one or more of the variables based on the observations.

US 2005/0082707 A1 discloses a control system for use with a multi-layer molding device having an inspection device for measuring a characteristic of a product of a cavity of the molding device and a controller adapted to receive information corresponding to the at least one characteristic from the inspection device and to alter the molding device based on the information.

EP 3 248 752 A1 discloses a method of controlling a manufacturing process having a machine to form a material into a component. The method comprises the steps of establishing an initial set of operating parameters for the machine, producing an initial component from the machine, inspecting the component to determine its acceptability relative to a desired component, determining a variation in the operating parameters to improve the acceptability of the component, effecting changes in the operating parameters and inspecting subsequent components to determine their acceptability.

JP H04 209004 A discloses a control method for an injection molding machine which automatically performs corrective calculation by referring to a large number of actually measured data in a trial shot period.

JP S57 116622 A discloses a control method for controlling an injection molding machine so as to operate under optimal molding conditions.

US 2008/0102147 A1 discloses an apparatus for supporting a worker involved in operating an injection molding machine including a neural network in which a prediction function is determined based on test molding.

EP 0 607 431 A1 discloses an expert system for retrieving conditions for injection molding in which a statistical technique is added to the functions of a conventional expert system, wherein causes of defects are inferred from records of countermeasures taken.

The document "Qualitätssicherung im Spritzgießprozeß" by Fuhrmann et al., Kunststoffe, Carl Hanser Verlag, München, Vol. 86, Nr. 12, 1, December 1996, discloses a system for improving quality assurance in an injection molding process, wherein imaging processing systems continuously measure the quality of a manufactured molding product and report the result to an optimization system.

### SUMMARY

The disclosure provides an injection molding system and an injection molding method, in which an injection molding parameter can be precisely adjusted according to defects in a product.

The injection molding system of the disclosure includes an injection molding machine, an automatic inspecting device and a defect correction module. The injection molding machine is adapted to inject and form a product according to an injection molding parameter. The automatic inspecting device is adapted to inspect the product to generate inspection data. The defect correction module is adapted to generate a calibrating parameter according to the inspection data. The injection molding machine is adapted to inject and form another product according to the injection molding parameter and the calibrating parameter.

In an embodiment of the disclosure, the defect correction module has a database. The database includes a plurality of pieces of defect sample information and a plurality of pieces of defect correction information. One of the pieces of the defect sample information corresponds to the inspection data, and one of the pieces of the defect correction information corresponds to the one of the pieces of the defect sample information. The defect correction module is adapted to generate the calibrating parameter according to the one of the pieces of the defect correction information.

In an embodiment of the disclosure, the injection molding system further includes a rationalization parameter module. The rationalization parameter module is adapted to generate the injection molding parameter according to product information.

In an embodiment of the disclosure, the injection molding system further includes a determination unit. The determination unit is adapted to determine whether the product is defective according to the inspection data so as to generate a determination result. The defect correction module is adapted to generate the calibrating parameter or not generate the calibrating parameter according to the determination result.

In an embodiment of the disclosure, the automatic inspecting device is an automatic optical inspecting device or an automatic weight inspecting device.

The injection molding method of the disclosure includes the following. A product is injected and formed by an injection molding machine according to an injection molding parameter. The product is inspected by an automatic inspecting device to generate inspection data. A calibrating parameter is generated by a defect correction module according to the inspection data. Another product is injected and formed by the injection molding machine according to the injection molding parameter and the calibrating parameter.

In an embodiment of the disclosure, the defect correction module has a database. The database includes a plurality of pieces of defect sample information and a plurality of pieces of defect correction information. One of the pieces of the defect sample information corresponds to the inspection data, and one of the pieces of the defect correction information corresponds to the one of the pieces of the defect sample information. The step of generating the calibrating parameter includes the following. The calibrating parameter is generated by the defect correction module according to the one of the pieces of the defect correction information.

In an embodiment of the disclosure, the injection molding method further includes the following. The injection molding parameter is generated by a rationalization parameter module according to product information.

In an embodiment of the disclosure, the injection molding method further includes the following. Whether the product is defective is determined by a determination unit according to the inspection data so as to generate a determination result. Next, the calibrating parameter is generated by the defect correction module or no calibrating parameter is generated according to the determination result.

In an embodiment of the disclosure, the step of inspecting the product includes the following. Automatic optical inspection or automatic weight inspection is performed on the product by the automatic inspecting device.

Based on the above, in the disclosure, the automatic inspecting device is utilized to inspect defects in the injection molded product so as to generate the inspection data. The automatic inspecting device of the disclosure provides a more precise defect inspection result than a conventional method of inspecting defects in a product by visual determination. By using the precise defect inspection result (i.e., the inspection data) and defect information pre-stored in the defect correction module, the injection molding parameter can be precisely adjusted according to the defects in the product. If defects in the product are inspected by visual determination as conventionally, since the inspection result thereof is not precise, the defect information stored in the defect correction module cannot be effectively utilized to precisely adjust the injection molding parameter. That is, the disclosure enables the effect of the defect correction module to be fully exhibited by precise inspection performed by the automatic inspecting device, thereby improving the yield of the injection molded products.

To make the above features and advantages of the disclosure more comprehensible, examples accompanied with drawings are described in detail as follows.

### BRIEF DESCRIPTION OF THE DRAWINGS

FIG. 1 is a schematic diagram of an injection molding system according to an embodiment of the disclosure.
FIG. 2 is a flowchart of an injection molding method according to an embodiment of the disclosure.
FIG. 3 is a schematic diagram of a defect correction module of FIG. 1.
FIG. 4 is a detailed flowchart of the injection molding method of FIG. 2.

### DESCRIPTION OF THE EMBODIMENTS

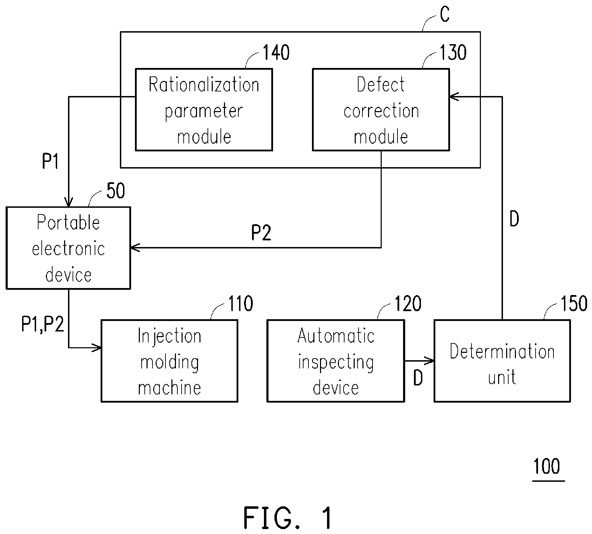

FIG. 1 is a schematic diagram of an injection molding system according to an embodiment of the disclosure. Referring to FIG. 1, an injection molding system 100 of the present embodiment includes an injection molding machine 110, an automatic inspecting device 120 and a defect correction module 130. The injection molding machine 110 is adapted to inject and form a product according to an injection molding parameter P1, and the product is, for example, a plastic product. The automatic inspecting device 120 is adapted to inspect the product to generate inspection data D. The defect correction module 130 is, for example, located in a cloud C and is adapted to generate a calibrating parameter P2 according to the inspection data D. The injection molding machine 110 is adapted to inject and form another product according to the injection molding parameter P1 and the calibrating parameter P2.

The automatic inspecting device 120 of the present embodiment provides a more precise defect inspection result than a conventional method of inspecting defects in a product by visual determination. By using the precise defect inspection result (i.e., the inspection data D) and defect information (i.e., later-described defect sample information I1 and defect correction information 12) pre-stored in the defect correction module 130, the calibrating parameter P2 can be precisely generated and the injection molding parameter P1 can be adjusted accordingly. If defects in the product are inspected by visual determination as conventionally, since the inspection result thereof is not precise, the defect information stored in the defect correction module 130 cannot be effectively utilized to precisely adjust the injection molding parameter P1. That is, the present embodiment enables the effect of the defect correction module 130 to be fully exhibited by precise inspection performed by the automatic inspecting device 120, thereby improving the yield of the injection molded products.

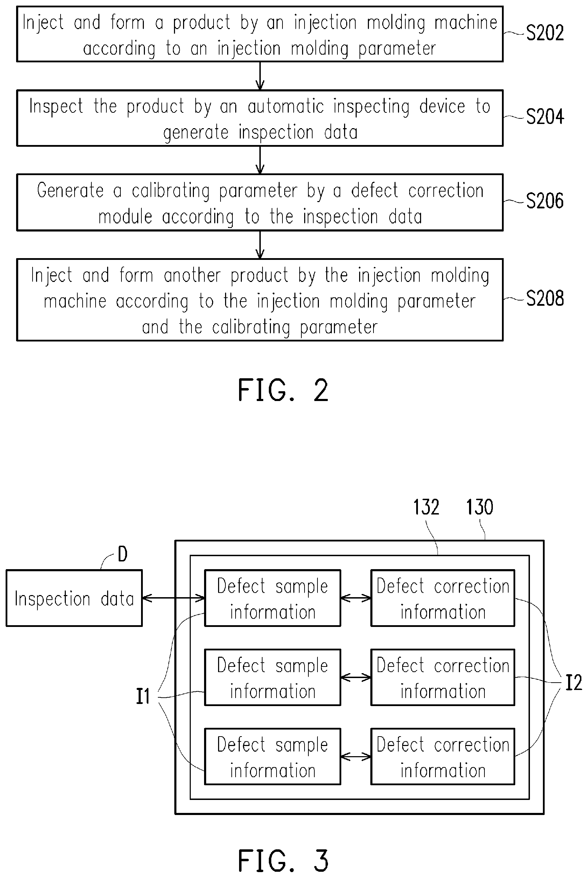

The main steps of the injection molding method of the disclosure are described below with reference to the embodiment shown in FIG. 1. FIG. 2 is a flowchart of the injection molding method according to an embodiment of the disclosure. Referring to FIG. 1 and FIG. 2, first, a product is injected and formed by the injection molding machine 110 according to the injection molding parameter P1 (step S202). Next, the product is inspected by the automatic inspecting device 120 to generate the inspection data D (step S204). The calibrating parameter P2 is generated by the defect correction module 130 according to the inspection data D (step S206). Another product is injected and formed by the injection molding machine 110 according to the injection molding parameter P1 and the calibrating parameter P2 (step S208).

In the present embodiment, the automatic inspecting device 120 may be an automatic optical inspecting device. The shape, size, straightness or gray scale distribution of the product is measured by the automatic optical inspecting device, so as to determine whether the product has defects and to determine the type and degree of the defects. In other embodiments, the automatic inspecting device 120 may be an automatic weight inspecting device or of other suitable type, which is not limited in the disclosure.

FIG. 3 is a schematic diagram of a defect correction module of FIG. 1. In detail, the defect correction module 130 of the present embodiment has a database 132, and the database 132 includes a plurality of pieces of defect sample information I1 and a plurality of pieces of defect correction information I2 corresponding to each other. One of the pieces of the defect sample information I1 corresponds to the inspection data D, one of the pieces of the defect correction information I2 corresponds to the one of the pieces of the defect sample information I1, and the defect correction module 130 is adapted to generate the calibrating parameter P2 as shown in FIG. 1 according to the one of the pieces of the defect correction information I2. FIG. 3 shows the number of pieces of each of the defect sample information I1 and the defect correction information I2 as three, which is only illustrative. The numbers of pieces of the defect sample information I1 and the defect correction information I2 may actually be more in order to precisely correspond to various degrees or types of defects in the injection molded products.

Referring to FIG. 1, the injection molding system 100 of the present embodiment further includes a rationalization parameter module 140. The rationalization parameter module 140 is, for example, located in the cloud C and is adapted to generate the injection molding parameter P1 according to product information. The product information is, for example, information input by a user to the rationalization parameter module 140 according to the size and material of a product intended to be injected and formed. The injection molding parameter P1 is, for example, transmitted from the rationalization parameter module 140 located in the cloud C to the user's portable electronic device 50 (such as a smartphone or a tablet), and then transmitted from the portable electronic device 50 to the injection molding machine 110. Similarly, the calibrating parameter P2 is, for example, transmitted from the defective correction module 130 located in the cloud C to the user's portable electronic device 50, and then transmitted from the portable electronic device 50 to the injection molding machine 110. However, the disclosure is not limited thereto. In other embodiments, the injection molding parameter P1 and the calibrating parameter P2 may be directly transmitted from the rationalization parameter module 140 and the defect correction module 130 respectively to the injection molding machine 110. In addition, in other embodiments, the rationalization parameter module 140 and the defect correction module 130 may not be provided in the cloud C but may be provided in an electronic apparatus, such as a computer system corresponding to the injection molding machine 110, at the user's end.

The injection molding system 100 of the present embodiment further includes a determination unit 150. The determination unit 150 is, for example, integrated into the automatic inspecting device 120 or the electronic apparatus, and is adapted to determine whether the product is defective according to the inspection data D so as to generate a determination result. The defect correction module 130 is adapted to generate the calibrating parameter P2 or not generate the calibrating parameter P2 according to the determination result.

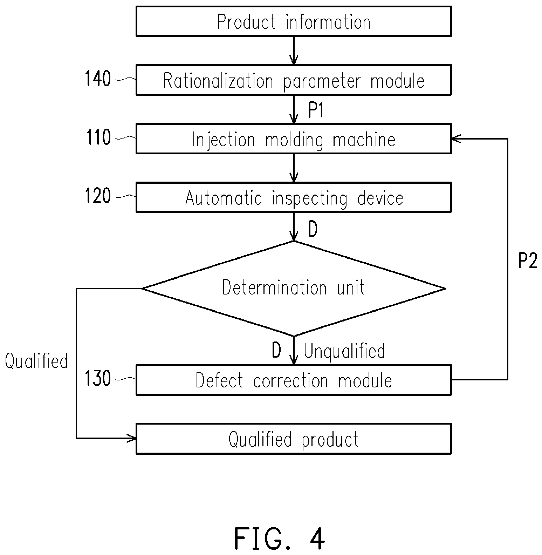

A detailed flow of the injection molding method of the present embodiment is described below by way of drawings. FIG. 4 is a detailed flowchart of the injection molding method of FIG. 2. Referring to FIG. 4, the user first inputs the product information to the rationalization parameter module 140, and the rationalization parameter module 140 accordingly generates the injection molding parameter P1 and transmits it to the injection molding machine 110. The injection molding machine 110 injects and forms a product according to the injection molding parameter P1, and the automatic inspecting device 120 performs defect inspection on the product. Next, the determination unit 150 determines whether the product is qualified according to the inspection data D of the automatic inspecting device 120. If determined qualified, the product is regarded as a qualified product and no further adjustment is made to the injection molding parameter P1. In contrast, if the product is determined unqualified, the inspection data D is transmitted to the defect correction module 130, and the defect correction module 130 accordingly generates the calibrating parameter P2. Moreover, the injection molding machine 110 injects and forms another product according to the injection molding parameter P1 adjusted by the calibrating parameter P2 until the product is regarded as a qualified product.

In summary, in the disclosure, the automatic inspecting device is utilized to inspect defects in the injection molded product so as to generate the inspection data. The automatic inspecting device of the disclosure provides a more precise defect inspection result than a conventional method of inspecting defects in a product by visual determination. By using the precise defect inspection result (i.e., the inspection data) and the defect information pre-stored in the defect correction module, the injection molding parameter can be precisely adjusted according to the defects in the product. If defects in the product are inspected by visual determination as conventionally, since the inspection result thereof is not precise, the defect information stored in the defect correction module cannot be effectively utilized to precisely adjust the injection molding parameter. That is, the disclosure enables the effect of the defect correction module to be fully exhibited by precise inspection performed by the automatic inspecting device, thereby improving the yield of the injection molded products.

## Claims

1. An injection molding system (100) comprising:
an injection molding machine (110) adapted to inject and form a product according to an injection molding parameter (P1);
an automatic inspecting device (120) adapted to inspect the product to generate inspection data (D); and
a defect correction module (130) adapted to generate a calibrating parameter (P2) according to the inspection data (D) and defect information pre-stored in the defect correction module (130), wherein the injection molding machine (110) is adapted to inject and form another product according to the injection molding parameter (P1) and the calibrating parameter (P2),
wherein the defect correction module (130) has a database (132), the database (132) comprises a plurality of pieces of defect sample information (I1) and a plurality of pieces of defect correction information (I2), one of the pieces of the defect sample information (I1) corresponds to the inspection data (D), one of the pieces of the defect correction information (12) corresponds to the one of the pieces of the defect sample information (I1), and the defect correction module (130) is adapted to generate the calibrating parameter (P2) according to the one of the pieces of the defect correction information (I2).

2. The injection molding system (100) according to claim 1, further comprising a rationalization parameter module (140), wherein the rationalization parameter module (140) is adapted to generate the injection molding parameter (P1) according to product information.

3. The injection molding system (100) according to claim 1, further comprising a determination unit (150), wherein the determination unit (150) is adapted to determine whether the product is defective according to the inspection data (D) so as to generate a determination result, and the defect correction module (130) is adapted to generate the calibrating parameter (P2) or not generate the calibrating parameter (P2) according to the determination result.

4. The injection molding system (100) according to claim 1, wherein the automatic inspecting device (120) is an automatic optical inspecting device or an automatic weight inspecting device.

5. An injection molding method comprising:
injecting and forming a product by an injection molding machine (110) according to an injection molding parameter (P1);
inspecting the product by an automatic inspecting device (120) to generate inspection data (D); and
generating a calibrating parameter (P2) by a defect correction module (130) according to the inspection data (D) and defect information pre-stored in the defect correction module (130); and
injecting and forming another product by the injection molding machine (110) according to the injection molding parameter (P1) and the calibrating parameter (P2),
wherein the defect correction module (130) has a database (132), the database (132) comprises a plurality of pieces of defect sample information (I1) and a plurality of pieces of defect correction information (12), one of the pieces of the defect sample information (I1) corresponds to the inspection data (D), one of the pieces of the defect correction information (I2) corresponds to the one of the pieces of the defect sample information (I1), and the step of generating the calibrating parameter (P2) comprises:
generating the calibrating parameter (P2) by the defect correction module (130) according to the one of the pieces of the defect correction information (I2).

6. The injection molding method according to claim 5, further comprising:
generating the injection molding parameter (P1) by a rationalization parameter module (140) according to product information.

7. The injection molding method according to claim 5, further comprising:
determining whether the product is defective by a determination unit (150) according to the inspection data (D) so as to generate a determination result; and
generating the calibrating parameter (P2) by the defect correction module (130) or not generating the calibrating parameter (P2) according to the determination result.

8. The injection molding method according to claim 5, wherein the step of inspecting the product comprises:
performing automatic optical inspection or automatic weight inspection on the product by the automatic inspecting device (120).

## Patentansprüche

1. Spritzgusssystem (100), das Folgendes umfasst:
eine Spritzgussmaschine (110), die ausgelegt ist, ein Produkt gemäß einem Spritzgussparameter (P1) einzuspritzen und zu bilden;
eine automatische Prüfvorrichtung (120), die ausgelegt ist, das Produkt zu prüfen, um Prüfdaten (D) zu erzeugen; und
ein Fehlerkorrekturmodul (130), das ausgelegt ist, einen Kalibrierparameter (P2) gemäß den Prüfdaten (D) und Fehlerinformationen, die im Fehlerkorrekturmodul (130) vorgespeichert sind, zu erzeugen, wobei die Spritzgussmaschine (110) ausgelegt ist, ein weiteres Produkt gemäß dem Spritzgussparameter (P1) und dem Kalibrierparameter (P2) einzuspritzen und zu bilden, wobei
das Fehlerkorrekturmodul (130) eine Datenbank (132) besitzt, die Datenbank (132) mehrere Teile von Fehlerprobeninformationen (I1) und mehrere Teile von Fehlerkorrekturinformationen (I2) umfasst, eines der Teile der Fehlerprobeninformationen (I1) den Prüfdaten (D) entspricht, eines der Teile der Fehlerkorrekturinformationen (I2) dem einen der Teile der Fehlerprobeninformationen (I1) entspricht und das Fehlerkorrekturmodul (130) ausgelegt ist, den Kalibrierparameter (P2) gemäß dem einen der Teile der Fehlerkorrekturinformationen (I2) zu erzeugen.

2. Spritzgusssystem (100) nach Anspruch 1, das ferner ein Rationalisierungsparametermodul (140) umfasst, wobei das Rationalisierungsparametermodul (140) ausgelegt ist, den Spritzgussparameter (P1) gemäß Produktinformationen zu erzeugen.

3. Spritzgusssystem (100) nach Anspruch 1, das ferner eine Bestimmungseinheit (150) umfasst, wobei die Bestimmungseinheit (150) ausgelegt ist, gemäß den Prüfdaten (D) zu bestimmen, ob das Produkt fehlerhaft ist, um ein Bestimmungsergebnis zu erzeugen, und das Fehlerkorrekturmodul (130) ausgelegt ist, gemäß dem Bestimmungsergebnis den Kalibrierparameter (P2) zu erzeugen oder den Kalibrierparameter (P2) nicht zu erzeugen.

4. Spritzgusssystem (100) nach Anspruch 1, wobei die automatische Prüfvorrichtung (120) eine automatische optische Prüfvorrichtung oder eine automatische Gewichtsprüfvorrichtung ist.

5. Spritzgussverfahren, das Folgendes umfasst:
Einspritzen und Bilden eines Produkts durch eine Spritzgussmaschine (110) gemäß einem Spritzgussparameter (P1);
Prüfen des Produkts durch eine automatische Prüfvorrichtung (120), um Prüfdaten (D) zu erzeugen; und
Erzeugen eines Kalibrierparameters (P2) durch ein Fehlerkorrekturmodul (130) gemäß den Prüfdaten (D) und Fehlerinformationen, die im Fehlerkorrekturmodul (130) vorgespeichert sind; und
Einspritzen und Bilden eines weiteren Produkts durch die Spritzgussmaschine (110) gemäß dem Spritzgussparameter (P1) und dem Kalibrierparameter (P2), wobei das Fehlerkorrekturmodul (130) eine Datenbank (132) besitzt, die Datenbank (132) mehrere Teile von Fehlerprobeninformationen (I1) und mehrere Teile von Fehlerkorrekturinformationen (I2) umfasst, eines der Teile der Fehlerprobeninformationen (I1) den Prüfdaten (D) entspricht, eines der Teile der Fehlerkorrekturinformationen (I2) dem einen der Teile der Fehlerprobeninformationen (I1) entspricht und der Schritt des Erzeugens des Kalibrierparameters (P2) Folgendes umfasst:
Erzeugen des Kalibrierparameters (P2) durch das Fehlerkorrekturmodul (130) gemäß dem einen der Teile der Fehlerkorrekturinformationen (I2).

6. Spritzgussverfahren nach Anspruch 5, das ferner Folgendes umfasst:
Erzeugen des Spritzgussparameters (P1) durch ein Rationalisierungsparametermodul (140) gemäß Produktinformationen.

7. Spritzgussverfahren nach Anspruch 5, das ferner Folgendes umfasst:
Bestimmen durch eine Bestimmungseinheit (150) gemäß den Prüfdaten (D), ob das Produkt fehlerhaft ist, um ein Bestimmungsergebnis zu erzeugen; und
Erzeugen des Kalibrierparameters (P2) durch das Fehlerkorrekturmodul (130) oder nicht Erzeugen des Kalibrierparameters (P2) gemäß dem Bestimmungsergebnis.

8. Spritzgussverfahren nach Anspruch 5, wobei der Schritt des Prüfens des Produkts Folgendes umfasst:
Durchführen einer automatischen optischen Prüfung oder einer automatischen Gewichtsprüfung an dem Produkt durch die automatische Prüfvorrichtung (120).

## Revendications

1. Système de moulage par injection (100) comportant :
une machine de moulage par injection (110) adaptée pour injecter et former un produit en fonction d'un paramètre de moulage par injection (P1) ;
un dispositif d'inspection automatique (120) adapté pour inspecter le produit pour générer des données d'inspection (D) ; et
un module de correction de défauts (130) adapté pour générer un paramètre d'étalonnage (P2) en fonction des données d'inspection (D) et des informations de défauts pré-enregistrées dans le module de correction de défauts (130), dans lequel la machine de moulage par injection (110) est adaptée pour injecter et former un autre produit en fonction du paramètre de moulage par injection (P1) et du paramètre d'étalonnage (P2),
dans lequel le module de correction de défauts (130) a une base de données (132), la base de données (132) comporte une pluralité d'éléments d'information d'échantillons de défauts (I1) et une pluralité d'éléments d'information de correction de défauts (I2), l'un des éléments d'information d'échantillons de défauts (I1) correspond aux données d'inspection (D), l'un des éléments d'information de correction de défauts (I2) correspond à l'un des éléments d'information d'échantillons de défauts (I1), et le module de correction de défauts (130) est adapté pour générer le paramètre d'étalonnage (P2) en fonction de l'élément parmi les éléments d'information de correction de défauts (I2).

2. Système de moulage par injection (100) selon la revendication 1, comportant en outre un module de paramètres de rationalisation (140), dans lequel le module de paramètres de rationalisation (140) est adapté pour générer le paramètre de moulage par injection (P1) en fonction d'informations de produit.

3. Système de moulage par injection (100) selon la revendication 1, comportant en outre une unité de détermination (150), dans lequel l'unité de détermination (150) est adaptée pour déterminer si le produit est défectueux en fonction des données d'inspection (D) de manière à générer un résultat de détermination, et le module de correction de défauts (130) est adapté pour générer le paramètre d'étalonnage (P2) ou ne pas générer le paramètre d'étalonnage (P2) en fonction du résultat de détermination.

4. Système de moulage par injection (100) selon la revendication 1, dans lequel le dispositif d'inspection automatique (120) est un dispositif d'inspection optique automatique ou un dispositif d'inspection de poids automatique.

5. Procédé de moulage par injection comportant les étapes consistant à :
injecter et former un produit par une machine de moulage par injection (110) en fonction d'un paramètre de moulage par injection (P1) ;
inspecter le produit par un dispositif d'inspection automatique (120) pour générer des données d'inspection (D) ; et
générer un paramètre d'étalonnage (P2) par un module de correction de défauts (130) en fonction des données d'inspection (D) et d'informations de défauts pré-enregistrées dans le module de correction de défauts (130) ; et
injecter et former un autre produit par la machine de moulage par injection (110) en fonction du paramètre de moulage par injection (P1) et du paramètre d'étalonnage (P2),
dans lequel le module de correction de défauts (130) a une base de données (132), la base de données (132) comporte une pluralité d'éléments d'information d'échantillons de défauts (I1) et une pluralité d'éléments d'information de correction de défauts (I2), l'un des éléments d'information d'échantillons de défauts (I1) correspond aux données d'inspection (D), l'un des éléments d'information de correction de défauts (I2) correspond à l'un des éléments d'information d'échantillons de défauts (I1), et l'étape de génération du paramètre d'étalonnage (P2) comporte de :
générer le paramètre d'étalonnage (P2) par le module de correction de défauts (130) en fonction de l'élément parmi les éléments d'information de correction de défauts (I2).

6. Procédé de moulage par injection selon la revendication 5, comportant en outre l'étape consistant à :
générer le paramètre de moulage par injection (P1) par un module de paramètres de rationalisation (140) en fonction d'informations de produit.

7. Procédé de moulage par injection selon la revendication 5, comportant en outre les étapes consistant à :
déterminer si le produit est défectueux par une unité de détermination (150) en fonction des données d'inspection (D) de manière à générer un résultat de détermination ; et
générer le paramètre d'étalonnage (P2) par le module de correction de défauts (130) ou ne pas générer le paramètre d'étalonnage (P2) en fonction du résultat de détermination.

8. Procédé de moulage par injection selon la revendication 5, dans lequel l'étape d'inspection du produit comporte l'étape de :
réaliser une inspection optique automatique ou une inspection de poids automatique sur le produit par le dispositif d'inspection automatique (120).
